# EUROPEAN PATENT APPLICATION

(11) **EP 4 686 157 A1**
(43) Date of publication of application: **28.01.2026**
(21) Application number: 24774123.4
(22) Date of filing: 19.03.2024
(51) Int. Cl.: H04L 12/28, H04L 41/0803, H04L 67/12, G06F 3/0481

(54) **SPACE CONFIGURATION METHOD AND APPARATUS, TARGET DETECTION METHOD AND APPARATUS, DEVICE, AND STORAGE MEDIUM**

(30) Priority: 20.03.2023 CN 202310280107
(71) Applicant: Lumi United Technology Co., Ltd., Shenzhen, Guangdong 518055 (CN)
(72) Inventor: MENG, Yujing, Shenzhen, Guangdong 518055 (CN)
(74) Representative: Metida
(86) International application number: PCT/CN2024/082540
(87) International publication number: WO 2024/193558

(57) **Abstract**

The present application relates to a space configuration method and apparatus, a target detection method and apparatus, a device, and a storage medium. The space configuration method comprises: displaying a configuration page, the configuration page comprising a space area corresponding to a target space; receiving a user selection of an arbitrary area any area selected in the space area to generate a custom selected monitoring real ; in response to a selection operation on the monitoring area , displaying a function configuration page for the selected monitoring area ; and obtaining a space type selected in the function configuration page, and displaying a configured area monitoring attribute adapted to the space type for the monitoring area in the function configuration page, wherein the area monitoring attribute is used for carrying out target detection on each monitoring area according to the area monitoring attribute of each monitoring area .

## Description

This application claims priority to Chinese Patent Application No. CN 202310280107.5, filed on March 20, 2023, titled "SPATIAL CONFIGURATION METHOD, TARGET DETECTION METHOD, APPARATUS, DEVICE AND STORAGE MEDIUM," the entire content of which is incorporated herein by reference.

### TECHNICAL FIELD

The present disclosure relates to the technical field of the Internet of Things, more specifically, the present disclosure relates to a spatial configuration method, a target detection method, an apparatus, a device and a storage medium.

### BACKGROUND

With the development of Internet of Things (IoT) technologies, intelligent control of devices has found ever wider application in daily life. Taking smart homes as an example, a smart home connects various household devices, such as audio video equipment, lighting systems, curtain controls, air conditioning controls, security systems, digital cinema systems, media servers, movie cabinet systems, and network appliances, through IoT technology, and offers a variety of functions and methods: appliance control, lighting control, telephone remote control, indoor/outdoor remote control, burglar alarms, environmental monitoring, HVAC control, infrared forwarding, and programmable timer control, among others.

At present, devices in target spaces (e.g., different rooms of a home) are usually configured uniformly. Consequently, existing spatial configuration methods lack flexibility, which easily leads to low accuracy in target detection.

### SUMMARY OF THE DISCLOSURE

The present disclosure provides a spatial configuration method, a target detection method, an apparatus, a device and a storage medium that may improve the flexibility of spatial configuration and thereby increase the accuracy of target detection.

A spatial configuration method, performed by a computer device, includes:
displaying a configuration page; wherein the configuration page includes a spatial region corresponding to a target space;
receiving a user selection of an arbitrary area within the spatial region, and generating a monitoring region defined by the user selection;
in response to a selection operation directed to the monitoring region, displaying a function configuration page for the monitoring region;
obtaining a spatial type selected on the function configuration page, and displaying, on the function configuration page, a configured region monitoring attribute adapted to the spatial type for the monitoring region; wherein a region monitoring attribute is configured for performing target detection within each monitoring region based on its respective region monitoring attribute.

A target detection method includes:
obtaining target signals of a target object for each monitoring region in a current space;
performing feature extraction on the target signals to obtain target features corresponding to the target object in each monitoring region;
determining, based on region monitoring attribute of each monitoring region and the target features, a target detection result corresponding to each monitoring region; wherein the region monitoring attribute is obtained by configuring a user selection of an arbitrary area within a spatial region of a configuration page, to generate monitoring regions, and for each monitoring region, configuring region monitoring attribute adapted to spatial types for each monitoring region.

A spatial configuration apparatus, includes:
a first display module, configured to display a configuration page; wherein the configuration page includes a spatial region corresponding to a target space;
a generation module, configured to receive a user selection of an arbitrary area within the spatial region, and generate a monitoring region defined by the user selection;
a second display module, configured to, in response to a selection operation directed to the monitoring region, display a function configuration page for the monitoring region;
a third display module, configured to obtain a spatial type selected on the function configuration page, and display, on the function configuration page, a configured region monitoring attribute adapted to the spatial type for the monitoring region; wherein the configured region monitoring attribute is configured for performing target detection within each monitoring region based on its respective region monitoring attribute.

A target detection apparatus, includes:
a signal acquisition module, configured to obtain target signals of a target object for each monitoring region in a current space;
a feature acquisition module, configured to perform feature extraction on the target signals to obtain target features corresponding to the target object in each monitoring region;
a detection result determination module, configured to determine, based on region monitoring attribute of each monitoring region and the target features, a target detection result corresponding to each monitoring region; wherein the region monitoring attribute is obtained by configuring a user selection of an arbitrary area within a spatial region of a configuration page, to generate monitoring regions, and for each monitoring region, configuring region monitoring attribute adapted to spatial types for each monitoring region.

A computer device is also provided, including a memory and a processor, wherein the memory stores instructions which, when executed by the processor, cause the processor to carry out the method described in any embodiment of the present disclosure.

A computer readable storage medium is provided, having stored thereon a computer program that, when executed by a processor, performs the steps of the spatial configuration method and/or the target detection method described in any embodiment of the present disclosure.

A computer program product or computer program is provided, the computer program product or computer program including computer instructions stored in a computer readable storage medium; the processor of the computer device reads the computer instructions from the computer readable storage medium, and when executing the computer instructions, performs the steps of the spatial configuration method and/or the target detection method described in any embodiment of the present disclosure.

### BRIEF DESCRIPTION OF THE DRAWINGS

To illustrate the technical solutions of the present disclosure more clearly, a brief description is given below of the drawings that are required in the description of embodiments of the disclosure. It will be evident that the drawings described are merely some embodiments of the disclosure, and that a person skilled in the art may obtain other drawings without creative effort.
FIG. 1 is an application environment diagram of a spatial configuration method in an embodiment.
FIG. 2 is a flow chart schematic of a spatial configuration method in an embodiment.
FIG. 3a is an interface schematic of an electronic device in an embodiment.
FIG. 3b is an interface schematic of an electronic device in another embodiment.
FIG. 4 is a schematic of point cloud features of a human body in an embodiment.
FIG. 5 is a mapping relationship diagram of a spatial configuration method in an embodiment.
FIG. 6 a spatial configuration method in another embodiment.
FIG. 7 is a flow chart schematic of a spatial configuration method in yet another embodiment.
FIG. 8 is an internal structure diagram of a computer device in an embodiment.
FIG. 9 is an internal structure diagram of a spatial configuration apparatus in an embodiment.
FIG. 10 is an internal structure diagram of a target detection apparatus in an embodiment.
FIG. 11 is an internal structure diagram of a computer device in an embodiment.

### DETAILED DESCRIPTIONE

To set forth the objects, technical solutions and advantages of the present disclosure more clearly, the following further describes the disclosure in detail with reference to the accompanying drawings and embodiments. It should be understood that the specific embodiments described herein are merely configured to explain the present disclosure and are not intended to limit the present disclosure.

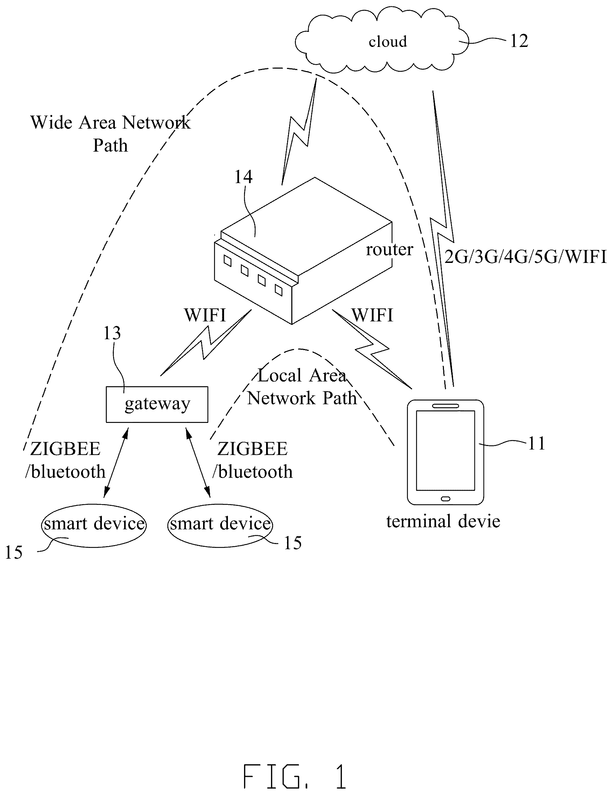

FIG. 1 is an application environment diagram of a spatial configuration method in an embodiment. Referring to FIG. 1, the spatial configuration method provided by an embodiment of the present disclosure may be applied to an IoT system shown in FIG. 1. The IoT system includes a terminal device 11, a cloud 12, a gateway device 13, a router 14 and a smart device 15. Specifically, the terminal device 11 may be any smart device having communication and storage functions, for example, a smart phone, a smart control panel, a desktop computer, a laptop computer, a tablet computer or other smart communication device having network connection function. The cloud 12 may be a network access server, a database server, a cloud server, etc. Optionally, the gateway device 13 may be built based on the ZigBee protocol, and the smart device 15 may be controlled by the terminal device 11 or the cloud 12 and may be pre joined to the gateway device 13. For example, the smart device 15 may be a device in a kit to which the gateway device 13 belongs when the gateway device 13 leaves the factory, or may be a device subsequently connected to the gateway device 13 through user operation.

Optionally, a client capable of managing the smart device 15 is installed in the terminal device 11. The client may be an application client (such as an APP of a mobile phone) or a web client, which is not limited herein.

Optionally, the terminal device 11 and the smart device 15 may both access an Ethernet through the gateway device 13, and the gateway device 13 may access the cloud 12 through a wired or wireless communication connection. For example, the gateway device 13 and the terminal device 11 may store acquired information in the cloud 12. Optionally, the terminal device 11 may also establish a network connection with the cloud 12 through 2G/3G/4G/5G, WiFi, etc., so as to acquire data issued by the cloud 12.

Optionally, the terminal device 11, the gateway device 13 and the smart device 15 may be in the same local area network, or may be in the same wide area network as the cloud 12. When the terminal device 11 and the gateway device 13 are in the same local area network, the terminal device 11 may interact with the gateway device 13 and the smart device 15 connected to the gateway device 13 through a local area network path, or may also interact with the gateway device 13 and the smart device 15 connected to the gateway device 13 through a wide area network path. When the terminal device 11 and the gateway device 13 are not in the same local area network, the terminal device 11 may interact with the gateway device 13 and the smart device 15 connected to the gateway device 13 through a wide area network path. The smart device 15 may include, but is not limited to, smart lamps, automatic curtains, air conditioners, smart door locks, smart cameras, smart air conditioners, smart TVs, smart control panels and other smart home products.

Automation refers to a linkage application built between the gateway device 13 or devices connected to the gateway device 13; the automation includes a trigger condition and an execution action, and devices that implement automatic scene control include a trigger device and a controlled device (or an execution device), and the two may communicate with each other through the gateway device 13. When the trigger device satisfies the trigger condition, the gateway device 13 controls the controlled device to perform a corresponding execution action. The trigger device may be various sensors such as radar sensors, pressure sensors, etc. The controlled device may be various switches, TVs, sockets, lamps and other smart devices 15.

Assume that the IoT system is provided with an automatic scene control: automatically turning on a light when a human body is detected in a target environment. A condition of this scene is that a human body is detected in the target environment, and an execution action is that a smart switch controls a bulb to turn on. Based on this application scenario, a radar sensor may be set as a trigger device, and a smart switch connected to a lamp may be set as a controlled device. A specific execution principle is: if automation is executed locally at the gateway through a local area network path, after the gateway receives an event that a human body is detected, the gateway finds a device that performs an action according to stored automatic configuration information. In this embodiment, the device that performs the action may be a smart switch, and the gateway notifies the smart switch to turn on the light, thereby implementing the automatic linkage of automatically turning on the light when a human body is detected in the target environment. If automation is executed in the cloud through a wide area network path, after the gateway receives the event that a human body is detected, the gateway reports the event to the cloud, and the cloud finds a device that performs an action according to stored scene configuration information. In this embodiment, the device that performs the action may be a smart switch, and the cloud notifies the smart switch to turn on the light through the gateway.

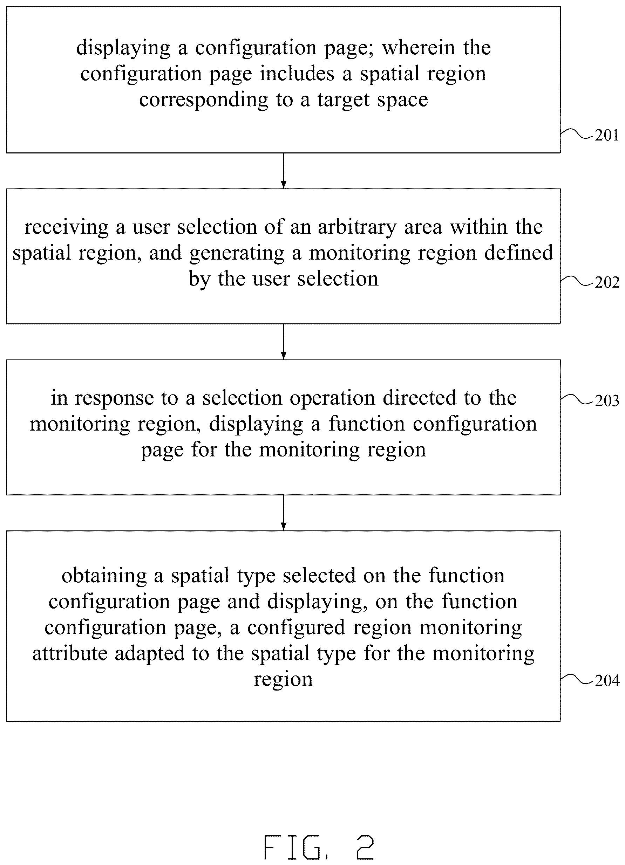

In an embodiment, as shown in FIG. 2, a spatial configuration method is provided. This embodiment illustrates the method by taking an example that the method is applied to a computer device. It may be understood that the computer device may be a terminal device or a smart device having a display function. The method may also be applied to a system including at least two of a smart device, a terminal device and a server, and is implemented through interaction of at least two of the terminal device, the smart device, the gateway device and the server. In this embodiment, the method includes the following steps:
Step S201: displaying a configuration page; wherein the configuration page includes a spatial region corresponding to a target space.

The configuration page is a page configured to display a spatial region corresponding to a target space, and may be configured for a user to configure the spatial region.

The target space is a space that currently needs spatial configuration. In an embodiment, a target space may be, but is not limited to, a household, a floor, a building and other household spaces or office spaces.

A spatial region is a region corresponding to a target space, and may specifically be a designated space that is pre divided, or a region, in the target space, corresponding to a monitoring range of a sensing device. In an embodiment, a spatial region displayed in a configuration page may include only a page region configured for a user to configure a monitoring region, or may further include a page region that is not configured for the user to configure a monitoring region, for example, a reference page region through which the user may configure a monitoring region by using a computer device, or an operation page region configured for the user to configure a monitoring region. In an embodiment, specifically, for example, when a target space is a household, a spatial region may be a living room in the household or a region in the living room, and when a target space is a floor, a spatial region may be a household on the floor or a living room on the floor.

In an embodiment, positions of spatial regions under a target space may be obtained through a position configuration step. In an embodiment, the position configuration step includes: performing division of a spatial region of a target space by using a technology of locating and tracking a target object such as a human body. Performing division of a spatial region of a target space by using a technology of locating and tracking a target object includes: obtaining a plurality of target signals under the target space; obtaining a distance, a speed and an angle of the target object according to the plurality of target signals; and performing division of the spatial region of the target space according to the distance, the speed and the angle of the target object.

Specifically, the plurality of target signals may be echo signals received after a millimeter wave radar device transmits a Frequency Modulated Continuous Wave (FMCW) signal. A computer device may obtain a distance between the target object and the millimeter wave radar device by performing a Fast Fourier Transform (FFT) operation on the echo signals. A point cloud speed of the target object may be obtained by comparing two echo signals. The computer device may obtain an angle of the target object relative to the millimeter wave radar device according to a phase difference of a plurality of echo signals. Locating and tracking of the target object may be implemented according to the distance, the speed and the angle of the target object, and then division of the spatial region of the target space may be performed.

In an embodiment, a configuration page may include a page region that displays a range of a corresponding spatial region, or may further include a page region that displays a sub spatial region of the corresponding spatial region, or a page region of a device of the corresponding spatial region. To facilitate a user to operate the configuration page, the displayed corresponding spatial region may include a page region of an equal scale plan view of the corresponding spatial region.

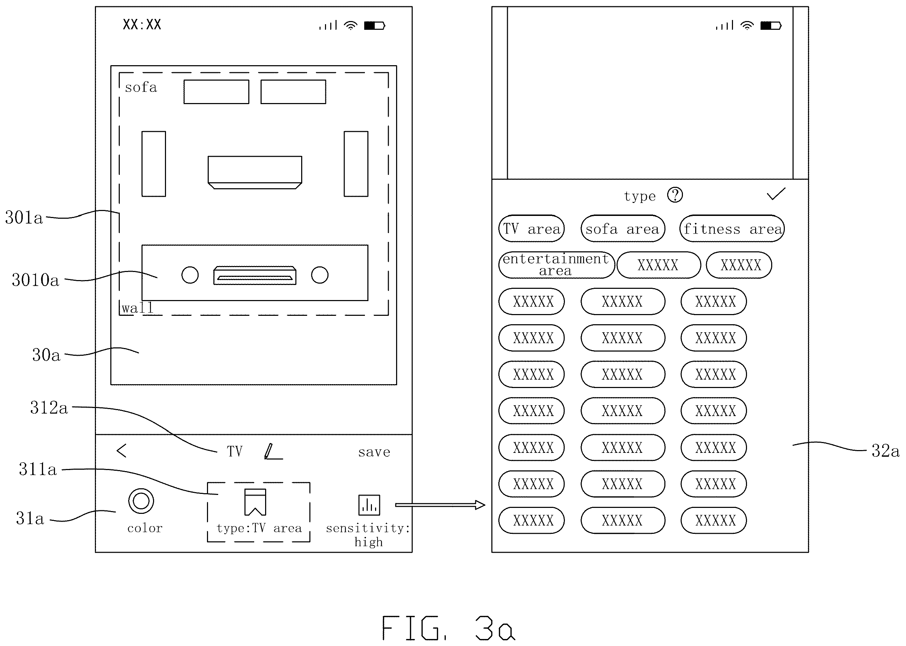

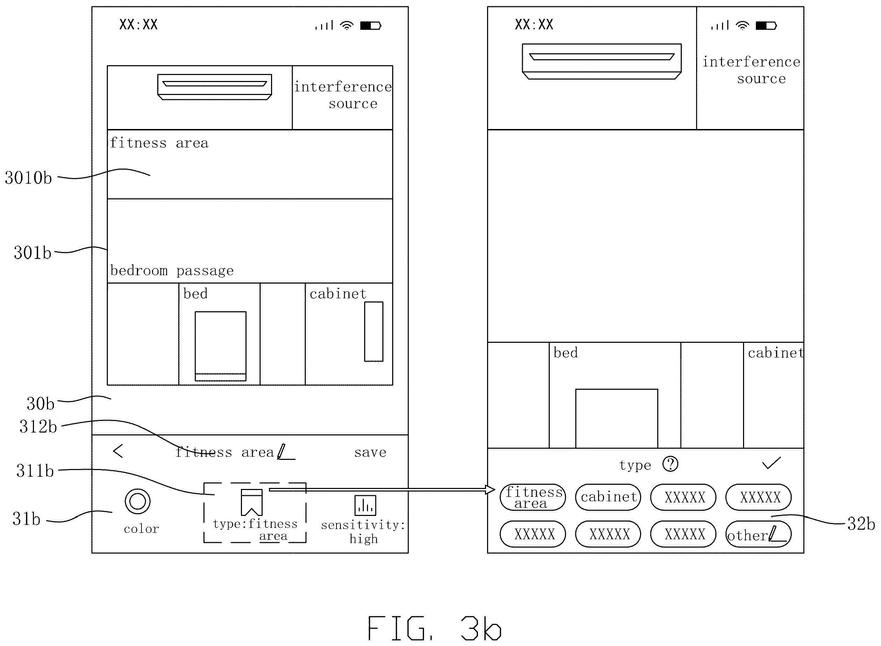

Specifically, as shown in FIG. 3a, a configuration page 30a may include a page region of an equal scale plan view of a living room 301a. As shown in FIG. 3b, a configuration page 30b may include a page region of an equal scale plan view of a bedroom 301b.

Step S202: receiving a user selection of an arbitrary area within the spatial region, and generating a monitoring region defined by the user selection.

Wherein, a monitoring region is a region that currently needs configuration of a region monitoring attribute and may perform target detection according to the region monitoring attribute. Specifically, the monitoring region may be any region selected through at least one drag, at least one click or other selection operation in a spatial region displayed in a configuration page, and may include, for example, one region or a plurality of regions in a spatial region, where the plurality of regions may be regions connected to each other or regions not connected to each other. Therefore, a user may customize a monitoring region according to personal living habits, etc., so that flexibility of spatial configuration may be improved.

Specifically, as shown in FIG. 3a, according to a selection operation performed by a user on a spatial region 301a of a configuration page 30a, the configuration page 30a highlights a region 3010a selected by the selection operation, that is, highlights a region corresponding to the monitoring region 3010a. Specifically, for example, a region selected by the selection operation may be highlighted through a color. Wherein, a region monitoring attribute refers to a monitoring attribute of a region, and may specifically be various attributes configured for the region. For example, the region monitoring attribute may include sensitivity of a region monitoring region, etc. The region monitoring attribute is configured for performing target detection on each monitoring region according to the region monitoring attribute of each monitoring region.

S203, in response to a selection operation directed to the monitoring region, displaying a function configuration page for the monitoring region;
Specifically, a selection operation on a monitoring region may include, but is not limited to, at least one drag, at least one click, etc.

Wherein, a function configuration page is a page for configuring a spatial type for a monitoring region. In an embodiment, a function configuration page includes a configuration item corresponding to a spatial type. Wherein, a configuration item may be an operation entry for configuring the spatial type. Specifically, a configuration item may include at least one of a plurality of selectable spatial types corresponding to the spatial type, a voice input button, and an input dialog box.

S204, obtaining a spatial type selected on the function configuration page and displaying, on the function configuration page, a configured region monitoring attribute adapted to the spatial type for the monitoring region.

Wherein, the spatial type is configured to adapt the space to the corresponding region monitoring attributes. The spatial type may represent the functional type of the space, the structural type of the space, the locational type of the space, etc. Monitoring regions with the same spatial type have the same configuration requirements for region monitoring attributes. Specifically, the spatial type may, for example, be a TV area, a sofa area, a bedroom area, a living room area, a first housing type area, a first floor number area, etc.

In an embodiment, the S204, obtaining the spatial type selected on the function configuration page and displaying, on the function configuration page, the configured region monitoring attribute adapted to the spatial type for the monitoring region, includes:
in response to a trigger operation for the configuration item corresponding to the spatial type, displaying a spatial type configuration page; the spatial type configuration page including a plurality of selectable spatial types;
in response to a user selection of a spatial type form the plurality of selectable spatial types, displaying, on the function configuration page, the selected spatial type as being configured for the monitoring region;
displaying, on the function configuration page, an automatically configured region monitoring attribute adapted to the spatial type for the monitoring region.

Wherein, a configuration item corresponding to a spatial type is a spatial type for configuring a spatial type of a monitoring region. A trigger operation on a configuration item corresponding to a spatial type may be triggered by a user or may be automatically triggered by a system. Specifically, for example, the computer device displays a spatial type configuration page in response to a click operation of a user on a configuration button corresponding to a configuration item for a spatial type in a function configuration page, or the computer device displays a spatial type configuration page in response to a trigger operation such as a long press operation of the user on a page region of a corresponding monitoring region that is highlighted in the function configuration page, or the computer device displays a spatial type configuration page in response to that no exit instruction is received within a preset time when a function configuration page for a selected monitoring region is displayed.

Specifically, taking a target space is a home and spatial regions are respective functional spaces in the home such as a living room and a bedroom as an example for illustration. For example, as shown in FIG. 3a, the computer device displays a configuration page 30a, and after acquiring a region 3010a selected in a spatial region 301a, generates a custom selected monitoring region 3010a, and in response to a selection operation on the monitoring region 3010a, for example, a long press operation on the monitoring region 3010a, displays a function configuration page 31a for the selected monitoring region 3010a. In response to a trigger operation on a configuration item corresponding to a spatial type, for example, a click operation on a configuration button 311a, or a long press operation on the monitoring region 3010a, a spatial type configuration page 32a is displayed. The spatial type configuration page 32a includes a plurality of selectable spatial types, for example, selectable spatial types such as "TV area", "sofa area", "fitness area", "entertainment area", and "reading area". The computer device displays, on the function configuration page 31a, a spatial type configured for the monitoring region 3010a in response to a selection operation on a selected spatial type, for example, a "TV area" selection operation, for example, a click operation, for example, displays the configured spatial type in a display region of the configuration button 311a, for example, "type: TV area". In addition, on the function configuration page 31a, a region monitoring attribute automatically configured for the monitoring region 3010a and adapted to the spatial type is displayed, for example, "sensitivity: high" is displayed. If a save operation displayed on the function configuration page 31a by a user is received, for example, a "save" button on the function configuration page 31a is clicked, a spatial type of the custom generated monitoring region 3010a is stored as a TV area, and sensitivity of the monitoring region 3010a is stored as high. In an embodiment, the computer device may further display a configuration item 312a for a name of the monitoring region 3010a on the function configuration page 31a, and associate a name corresponding to an input operation with the monitoring region 3010a after receiving an input operation on the configuration item for displaying the name of the monitoring region 3010a.

For another example, as shown in FIG. 3b, the computer device displays a configuration page 30b, and after acquiring a region 3010b selected in a spatial region 301b, generates a custom selected monitoring region, and in response to a selection operation on the monitoring region, for example, a long press operation on the selected region 3010b, the computer device displays a function configuration page 31b for the selected monitoring region. In response to a trigger operation on a configuration button 311b of a configuration item corresponding to a spatial type, a spatial type configuration page 32b is displayed. The spatial type configuration page 32b includes a plurality of selectable spatial types, for example, selectable spatial types such as "TV area", "sofa area", "fitness area", "entertainment area", and "reading area". The computer device displays, on the function configuration page 31b, a spatial type configured for the monitoring region in response to a selection operation on a selected spatial type, for example, a "fitness area" selection operation, for example, "type: fitness area" is displayed on the function configuration page 31b; on the function configuration page 31a, a region monitoring attribute automatically configured for the monitoring region and adapted to the spatial type is displayed, for example, "sensitivity: high" is displayed. In an embodiment, the computer device may further display a configuration item 312b for a name of the monitoring region 3010b on the function configuration page 31b, and display a name corresponding to an input operation in the monitoring region 3010b, for example, "fitness area", and associate the name corresponding to the input operation with the monitoring region 3010b after receiving an input operation on the configuration item for displaying the name of the monitoring region 3010b.

In an embodiment, displaying, on the function configuration page, the configured region monitoring attribute adapted to the spatial type for the monitoring region includes:
obtaining a predetermined mapping relationship between spatial types and region monitoring attributes;
displaying, on the function configuration page, the region monitoring attribute for the monitoring region, wherein the region monitoring attribute is automatically configured based on the predetermined mapping relationship and is adapted to the spatial type.

Wherein, the region monitoring attribute is configured for performing target detection on each monitoring region according to the region monitoring attribute of each monitoring region. Specifically, the region monitoring attribute may be, for example, high sensitivity, low sensitivity, etc.

Wherein, a predetermined mapping relationship between the spatial type and the region monitoring attribute refers to a correspondence that is predetermined and stored between the spatial type and the region monitoring attribute before spatial configuration is performed. The mapping relationship between the spatial type and the region monitoring attribute may be set in a personalized manner by a user, or may be obtained by a system through statistical data analysis. Specifically, for example, a region monitoring attribute corresponding to a spatial type of a TV area is high sensitivity, and a region monitoring attribute corresponding to a spatial type of a fitness area is low sensitivity, etc.

Wherein, the mapping relationship between the spatial type and the region monitoring attribute is obtained through a relationship configuration step.

In an embodiment, the relationship configuration step includes: obtaining environmental signals corresponding to spatial regions of a plurality of spatial types, and determining a mapping relationship between each spatial type and the region monitoring attribute based on the environmental signals corresponding to the spatial regions of the plurality of spatial types.

Wherein, an environmental signal of a spatial region is a detection signal collected by a detection device in the spatial region. An environmental signal corresponding to a spatial region may include, for example, an echo signal received after a millimeter wave radar device transmits a Frequency Modulated Continuous Wave (FMCW) signal in the spatial region, and may further include image information collected by an image collection device in the spatial region, etc.

Specifically, in an embodiment, the relationship configuration step of the spatial types and the region monitoring attributes , includes:
obtaining environmental signals corresponding to spatial regions of a plurality of spatial types;
determining, based on the environmental signals, activity state features and interference features of a target object in each spatial region;
determining, based on a relationship between an activity state features and an interference feature of the target object in each spatial region, mapping relationships between various spatial types and region monitoring attributes.

Wherein, an activity state feature of a target object under a spatial region is a feature of an activity performed by the target object under the spatial region. In an embodiment, a computer device may process an echo signal received after a millimeter wave radar device transmits a Frequency Modulated Continuous Wave (FMCW) signal in a spatial region, to obtain a point cloud distribution state of the target object, so as to acquire an activity state feature of the target object under each spatial region. Specifically, an activity performed by a target object may include, for example, walking, exercising or being still, etc. An activity state feature of a target object may include, for example, high point cloud complexity, low point cloud complexity, etc.

Specifically, for example, a person to be tested is allowed to be still, walk and exercise in spatial regions respectively, and the computer device may obtain point cloud distribution states of a human body in a still state, a walking state and an exercising state. After analyzing the point cloud distribution states of the person to be tested, the computer device may obtain features of human bodies in different activity states: a moving human body has a large quantity of point clouds, an obvious speed and a large signal to noise ratio, that is, the point cloud complexity is high; a still human body has a small quantity of point clouds with speeds and a small quantity of still point clouds, a low signal to noise ratio and simple point clouds, that is, the point cloud complexity is low.

Wherein, an interference feature refers to a degree to which an interference source interferes with a target detection result of a target object. In an embodiment, the computer device may process or analyze image information in an environmental signal to obtain an interference source in a spatial region, for example, obtain that an interference source in a fitness area is a green plant, and obtain an interference feature under each spatial region according to a pre stored mapping relationship between interference sources and interference features. Specifically, the interference feature may be, for example, a weak interference feature, a strong interference feature, etc.

Specifically, in an embodiment, the relationship configuration step includes: determining mapping relationships between the various spatial types and the activity state features of the target object, based on mapping relationships between the spatial types and region activity attributes, and mapping relationships between the region activity attributes and the activity state features of the target object; determining, based on the mapping relationships between the various spatial types and the activity state features of the target object, and the mapping relationships between the spatial types and the interference features, an activity state feature and a corresponding interference feature of the target object for each spatial type; determining, based on the mapping relationships between the activity state features, the interference features of each target object and the region monitoring attributes, the mapping relationships between the various spatial types and the region monitoring attributes.

Wherein, a region activity attribute refers to an attribute of an activity performed by a target object in a spatial region. In an embodiment, a computer device may determine a region activity attribute according to point cloud features, image features, etc. of a target object in an environmental signal of a spatial region. Specifically, for example, a region activity attribute of a fitness area may be running, and a region activity attribute of a reading area may be sitting still, etc.

The mapping relationship between the region activity attribute and the activity state feature of the target object refers to the correspondence between the region activity attribute and the activity state feature of the target object. The mapping relationship is configured to confirm the activity state feature of the target object according to the region activity attribute. Specifically, for example, if the region activity attribute is "running", the corresponding activity state feature is "high point cloud complexity".

Specifically, the mapping relationship between each region activity attribute and the activity state feature of the target object may be established through the activity state features corresponding to the tested target object when it is active in each monitoring region. For example, the tested human body usually runs in the fitness area; during running the human point cloud quantity is large, the speed is obvious, and the signal to noise ratio is high-i.e., the point cloud complexity is high. The tested human body is often static in the sleep area; when static the human body has few point clouds with speed, the static point clouds are also few, and the signal to noise ratio is low-i.e., the point cloud complexity is low.

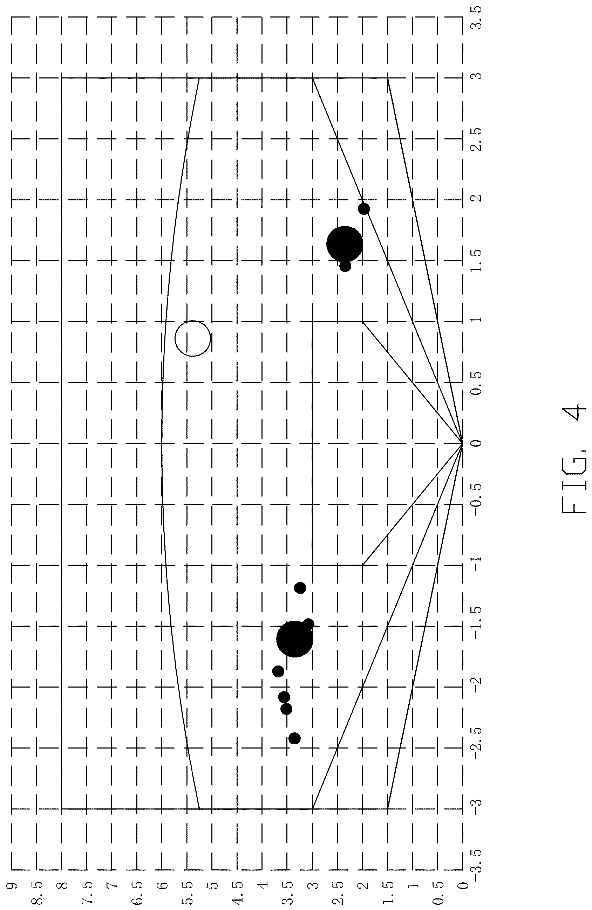

In one embodiment, the mapping relationship between each region activity attribute and the activity state feature of the target object is established by the computer device through the activity state features corresponding to the tested target object when it is active in the monitoring regions under the respective region activity attributes. Specifically, as shown in FIG. 4, the computer device may build a floor plan of the test space and obtain the activity state features corresponding to the tested human body when it is active in the test space. In FIG. 4 the solid large circle represents a moving human body, the hollow large circle represents a static human body, and the solid small dots represent point clouds. As illustrated, around the solid large circle there are many solid small dots with speed. Therefore the computer device may obtain that the moving human body has high point cloud complexity and the static human body has low point cloud complexity. Since the tested human body usually runs in the fitness area and during running the human point cloud quantity is large, the speed is obvious, and the signal to noise ratio is high-i.e., the point cloud complexity is high-and since the tested human body is often static in the sleep area and when static the human body has few point clouds with speed, the static point clouds are also few, and the signal to noise ratio is low-i.e., the point cloud complexity is low-the computer device may, for example, establish the mapping relationship between "running" and "high point cloud complexity" and establish the mapping relationship between "sleep" and "low point cloud complexity", etc.

The mapping relationship between the spatial type and the activity state feature of the target object refers to the correspondence between the spatial type and the activity state feature of the target object. The mapping relationship is configured to confirm the activity state feature of the target object according to the spatial type. The mapping relationship between the spatial type and the activity state feature of the target object may be established through the activity state features corresponding to the tested target object when it is active in the monitoring regions of each spatial type, or may be customized and set according to user instructions.

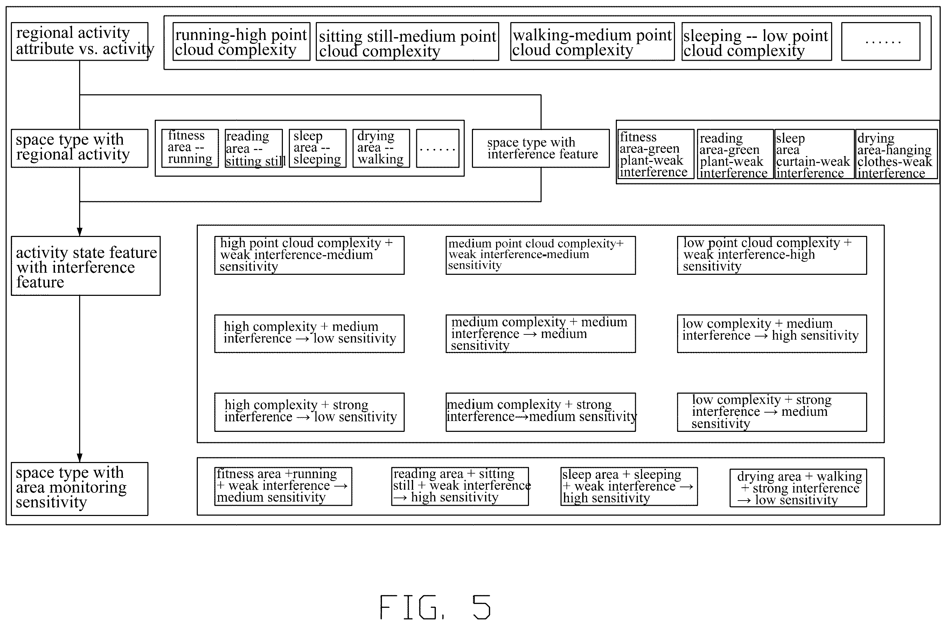

Specifically, as shown in FIG. 5, when the spatial type is "fitness area" the computer device, based on the mapping relationship between spatial type and region activity attribute (e.g., the mapping relationship between fitness area and running) and the mapping relationship between region activity attribute and activity state feature of the target object (e.g., the mapping relationship between running and high point cloud complexity), determines the mapping relationship between spatial type and activity state feature of the target object (e.g., fitness area corresponds to high point cloud complexity). The computer device, based on the mapping relationship between spatial type and activity state feature of the target object (e.g., fitness area corresponds to high point cloud complexity) and the mapping relationship between spatial type and interference feature (e.g., fitness area corresponds to weak interference feature), determines the mapping relationship among spatial type, activity state feature and interference feature (e.g., fitness area corresponds to high point cloud complexity and weak interference feature). The mapping relationship between spatial type and interference feature may be obtained through the mapping relationship between spatial type and interference source and the mapping relationship between interference source and interference feature; for example, through the mapping relationship between fitness area and green plants and the mapping relationship between green plants and weak interference feature, the mapping relationship between fitness area and weak interference feature is obtained. In addition, based on the mapping relationship among activity state feature, interference feature and region monitoring attribute (e.g., high point cloud complexity & weak interference feature correspond to medium region sensitivity), the mapping relationship between spatial type and region monitoring attribute is determined (e.g., fitness area corresponds to medium region sensitivity).

In one embodiment, the function configuration page includes a configuration item of the configuration item of the region monitoring attribute; after S204, obtaining the spatial type selected on the function configuration page and displaying, on the function configuration page, the configured region monitoring attribute adapted to the spatial type for the monitoring region, the method further includes:
in response to a trigger operation on the configuration item of the region monitoring attribute, displaying an attribute configuration page for the region monitoring attribute;
in response to an adjustment operation on the configuration item of the region monitoring attribute on the attribute configuration page, displaying an adjusted region monitoring attribute on the configuration item corresponding to the region monitoring attribute.

The trigger operation on the configuration item of the region monitoring attribute is an operation for triggering configuration of the region monitoring attribute of the monitoring region. The trigger operation on the configuration item of the region monitoring attribute may be triggered by a user or may be automatically triggered by the system.

Specifically, for example, the computer device, in response to the user's click operation on a configuration button corresponding to the region monitoring attribute configuration item on the function configuration page, displays the attribute configuration page, or, in response to the user's trigger operation (e.g., long press operation) on the page area corresponding to the monitoring region displayed on the function configuration page, displays the attribute configuration page. Specifically, the computer device may display, on the attribute configuration page, a plurality of selectable region monitoring attributes, such as medium region sensitivity, low region sensitivity, etc.

The adjustment operation on the configuration item of the region monitoring attribute on the attribute configuration page is an operation for adjusting the region monitoring attribute. Specifically, it may be, for example, a selection operation on a selectable region monitoring attribute or a voice input operation, etc.

The spatial configuration method of the present embodiment includes: displaying a configuration page; the configuration page including a spatial region corresponding to a target space; obtaining any region selected in the spatial region to generate a custom selected monitoring region; in response to a selection operation on the monitoring region, displaying a function configuration page for the selected monitoring region; obtaining the spatial type selected on the function configuration page, and displaying, on the function configuration page, the configured region monitoring attribute adapted to the spatial type for the monitoring region; wherein region monitoring attribute is configured for performing target detection within each monitoring region based on its respective region monitoring attribute. Therefore, the region monitoring attribute adapted to the spatial type may be assigned to the monitoring region, thereby improving the flexibility of spatial configuration. In addition, the present embodiment also generates a custom selected monitoring region through any region displayed in the configuration page, which improves the flexibility and operation convenience of generating the monitoring region. Moreover, selecting the spatial type on the function configuration page and displaying, on the function configuration page, the configured region monitoring attribute adapted to the spatial type for the monitoring region further improves configuration flexibility and operation convenience.

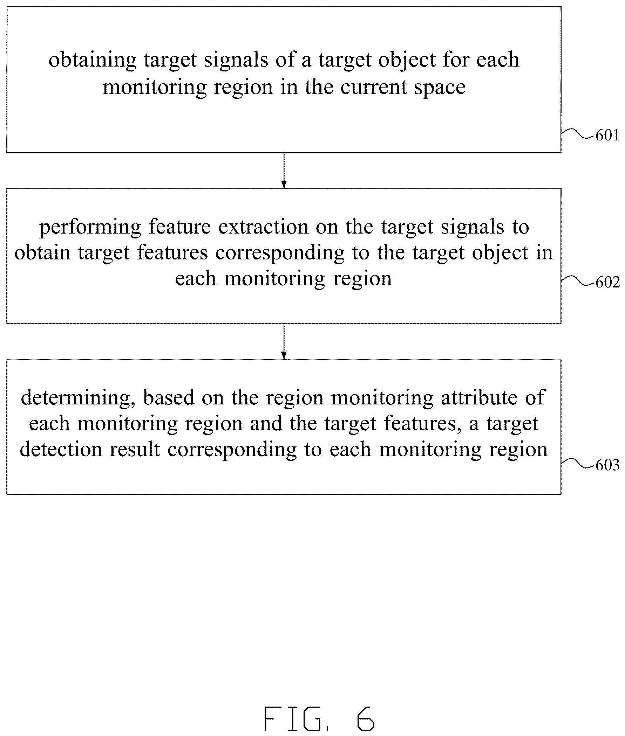

FIG. 6 is a flow schematic diagram of the target detection method in another embodiment. The present embodiment takes the method applied in a computer device as an example for description. It may be understood that the computer device may be a terminal device or a smart device having a target detection function, such as a radar device or other electronic device. The method may also be applied in a system including at least two of a smart device, a terminal device and a server, and is implemented through the interaction of at least two of a terminal device, a smart device, a gateway device and a server. As shown in FIG. 6, the target detection method in the present embodiment includes the following steps:
Step S601, obtaining target signals of a target object for each monitoring region in a current space;
Step S602, performing feature extraction on the target signals to obtain target features corresponding to the target object in each monitoring region;
Step S603, determining, based on the region monitoring attribute of each monitoring region and the target features, a target detection result corresponding to each monitoring region.

The target signals are signals collected by a signal collection device for the target object in each monitoring region in the current space. Specifically, they may be, for example, echo signals received by a millimeter wave radar or image signals collected by an image collection device.

The target features are features of the target object and are configured to determine the target detection result of the target object.

In one embodiment, Step S602, performing feature extraction on the target signals to obtain target features corresponding to the target object in each monitoring region, may include comparing the echo signals to obtain feature point clouds of the target object in each monitoring region, such as feature point clouds of a human body, feature point clouds of a pet dog, etc.

The region monitoring attribute includes a region monitoring attribute. The region monitoring attribute is obtained by configuring a user selection of an arbitrary area within the spatial region of the configuration page to generate a monitoring region and configuring, for each monitoring region, a region monitoring attribute adapted to the spatial type of each monitoring region. The confirmation process of the region monitoring attribute may refer to the related description of the first embodiment and will not be repeated here.

In one embodiment, Step S603: determining, based on the region monitoring attribute of each monitoring region and the target features, a target detection result corresponding to each monitoring region s, includes:
obtaining a feature strength attribute corresponding to the target features of the target object in each monitoring region;
determining, based on the region monitoring attribute of each monitoring region and a feature strength attribute of each target feature, the target detection result corresponding to each monitoring region.

In one embodiment, Step S603, determining, based on the region monitoring attribute of each monitoring region and a feature strength attribute of each target feature, the target detection result corresponding to each monitoring region, includes:
when a region monitoring attribute of a current monitoring region is a low region monitoring attribute, and a corresponding feature strength attribute is a strong feature attribute, determining that the target detection result of the monitoring region is that a target is detected;
when the region monitoring attribute of the current monitoring region is a high region monitoring attribute, and the corresponding feature strength attribute is a weak feature attribute or a strong feature attribute, determining that the target detection result of the monitoring region is that the target is detected.

The low region monitoring attribute refers to a low monitoring attribute of the spatial region. When the computer device detects that the region monitoring attribute of the monitoring region is low, if the feature strength attribute of the monitoring region is greater than a first preset strength attribute, the computer device determines that the target detection result of the monitoring region is that a target is detected. The high region monitoring attribute refers to a high monitoring attribute of the spatial region. When the region monitoring attribute of the monitoring region is high and the feature strength attribute of the monitoring region is greater than a second preset strength attribute, the computer device determines that the target detection result of the monitoring region is that a target is detected. The first preset strength attribute is greater than the second preset strength attribute. Specifically, for example, the low region monitoring attribute may be low sensitivity, and the high region monitoring attribute may be high sensitivity.

In one embodiment, Step S603: determining a target detection result corresponding to each monitoring region based on the region monitoring attribute of each monitoring region and the feature strength attribute of each target feature, includes: when the region monitoring attribute of the current monitoring region is a low region monitoring attribute and the corresponding feature strength attribute is a weak feature attribute, automatically discarding the feature strength region monitoring attribute so as to avoid false alarms.

Specifically, for example, if the current monitoring region is a fitness area, the region monitoring attribute of the fitness area is a low region monitoring attribute, and the current feature strength attribute of the fitness area is a weak feature attribute such as a weak human body feature point cloud, the computer device automatically discards the information of the feature strength attribute. For example, in the monitoring region having the low region monitoring attribute, the information of the weak human body feature point cloud is discarded and no human body detection report is made.

In one embodiment, the target object includes a human body; the region monitoring attribute includes region sensitivity. Step S603: determining, based on the region monitoring attribute of each monitoring region and the target features, a target detection result corresponding to each monitoring region, includes: determining a human body detection result corresponding to each monitoring region, based on the region sensitivity of each monitoring region and a feature strength attribute corresponding to a target features of the human body;

The method further includes: when the human body detection result corresponding to the monitoring region is that a human body is detected, and a trigger condition of an automation control scheme corresponding to the monitoring region is a detection of the human body, controlling a corresponding device to perform the automation control scheme.

Specifically, the feature strength attribute corresponding to the target features of the human body may include a weak human body feature point cloud or a strong human body feature point cloud.

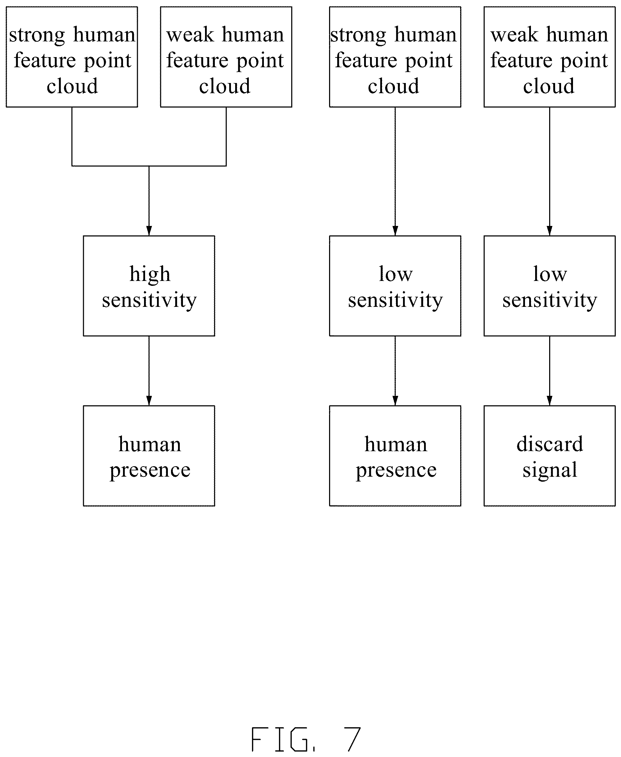

As shown in FIG. 7, when the region monitoring attribute of the current monitoring region is a high region sensitivity (also called high sensitivity), no matter whether the corresponding feature strength attribute detected in the current monitoring region is a weak human body feature point cloud or a strong human body feature point cloud, the computer device determines that the target detection result of the monitoring region is that a human body is present.

When the region monitoring attribute of the current monitoring region is a low region sensitivity (also called low sensitivity) and the corresponding feature strength attribute is a strong human body feature point cloud, the computer device determines that the target detection result of the monitoring region is that a human body is present.

When the region monitoring attribute of the current monitoring region is a low region sensitivity (also called low sensitivity) and the corresponding feature strength attribute is a weak human body feature point cloud, the computer device discards the signal.

In the target detection method of the present embodiment, the region monitoring attribute is obtained by configuring a user selection of an arbitrary area within the spatial region of the configuration page to generate a monitoring region and configuring, for each monitoring region, a region monitoring attribute adapted to the spatial type of each monitoring region. Target detection is performed for each monitoring region according to the region monitoring attribute of each monitoring region. Therefore, the accuracy of target detection may be improved.

The present disclosure further provides an application scenario, which may specifically be a smart home scenario. Specifically, the application of the spatial configuration method in the application scenario is as follows:

Taking human body detection for the living room as an example, the target detection method may include: the computer device preconfigures the mapping relationship between the TV area and the high sensitivity; pre divides the spatial region of the living room; displays the configuration page including the spatial region corresponding to the living room; obtains any region selected in the spatial region to generate a custom selected monitoring region; in response to a selection operation on the monitoring region, displays the function configuration page for the selected monitoring region; obtains the TV area selected on the function configuration page and displays, on the function configuration page, the high sensitivity corresponding to the TV area; obtains the echo signal corresponding to the monitoring region of the TV area in the current living room; performs feature extraction on the echo signal to obtain the feature point cloud of the human body; and when the feature point cloud of the human body is a weak human body feature point cloud or a strong human body feature point cloud, determines that the target detection result of the monitoring region corresponding to the TV area is that a human body is present.

Specifically, the user may customize and set functional region blocks, namely monitoring regions, in the configuration page through the computer device according to the distribution of the home space, and configure the corresponding region type for each functional region. Then the predetermined "region type-sensitivity matching" relationship is obtained, and the corresponding region sensitivity is automatically matched according to the region type of each functional region.

The "region type-sensitivity matching" relationship may be pre obtained by analyzing the point cloud data of different human bodies in different activity states. Specifically, the point cloud signals to noise ratio, speed and quantity strength of the human body in different activity states are analyzed. A moving human body has a large quantity of point clouds, high complexity, obvious speed and large signal to noise ratio; a static human body has a small quantity of point clouds, low speed, low signal to noise ratio and simple point clouds, and the "activity state vs. point cloud" correspondence is divided, for example, as shown in FIG. 5. Then the computer device may divide the approximate activity attribute of personnel in different living regions to obtain the "region vs. activity state" relationship; analyze the strength of environmental interference factors in different regions to establish the "region vs. interference source strength" relationship; and further judge the comprehensive influence ability of "point clouds" and "interference source strength" in different activity states on the sensitivity requirement of device identification.

Through the above steps, the following correspondences may be built in as matching factors: "activity vs. point cloud correspondence", "region activity attribute + region interference factor", and "sensitivity correspondence". Then through "region" mapping "region activity", the required sensitivity is obtained through "region activity" (namely, point cloud complexity) + "region interference source situation", and further the relationship between different region types and device sensitivity is deduced, so that the matching relationship between region type and sensitivity is obtained as different. For example, the "fitness area" usually contains movements such as running, and the point clouds are complex; under weak interference, using medium sensitivity monitoring is more accurate. The correspondence between region type "label and sensitivity" is established.

Finally, in application, the user only needs to select the functional attribute of each functional region under his home space, namely the region type, through the computer device during the region configuration process. The background automatically matches the corresponding region sensitivity according to the "region type-sensitivity matching" relationship algorithm calculation rule, thereby improving region detection accuracy. At the same time, if the user considers that the default sensitivity does not match the actual usage, the user is also supported to reset a sensitivity for the region according to personal needs.

Through the above steps, the computer device may complete rapid setting of different regions. For a region with high sensitivity, the radar may still detect the human body well and feed back to the user end even when the human body is static. For example, the "bedroom area" defaults to "high sensitivity", and even when asleep the radar may detect the human body and coordinate the smart system to execute corresponding sleep automation. For a region with low sensitivity, the radar reports a person only when the point clouds are sufficient to satisfy complex human body features, avoiding false alarms. For example, the "clothes drying area" defaults to "low sensitivity", which may prevent the radar from falsely reporting the presence of a human body due to the shaking of drying clothes.

After the sensitivity configuration of each functional region is completed, the computer device detects the activity state of the target (e.g., human body) in each functional region based on the sensitivity configured for each region. The echo signal of the radar is obtained to determine the current point cloud data of the region, and the human body activity detection is reported in combination with the detection sensitivity algorithm rule already configured for the current region.

Specifically, the computer device may make a comprehensive judgment according to conditions created by the target (such as duration, point clouds, quality, moving distance, etc.), namely, according to the quantity of point clouds obtained, perform quality analysis in accordance with the condition rules corresponding to the sensitivity of each region, and further obtain the activity state of the target (e.g., human body) in each functional region.

For example, high sensitivity: low judgment duration, low point cloud quantity and quality requirement, low moving distance requirement. Low sensitivity: long judgment duration, high point cloud quantity and quality requirement, high moving distance requirement. Thereby, through different sensitivity settings, the human body activity state in different environmental regions is detected more accurately.

In the present embodiment, by setting the region type, the radar may perform different sensitivity detection for different regions. For a region with high sensitivity, the radar will report human body presence even for small point cloud fluctuations, ensuring that the radar may detect the human body and feed back to the user end even when the human body is in a sleep state. For a region with low sensitivity, the radar automatically discards point clouds whose human body feature recognition is not accurate enough, avoiding false alarms.

It should be understood that although the steps in the flowcharts of FIG. 2 and FIG. 6 are displayed in sequence according to the direction of the arrows, these steps are not necessarily executed in the order indicated by the arrows. Unless explicitly stated otherwise in this text, there is no strict order requirement for the execution of these steps, and they can be executed in other orders. Moreover, at least a portion of the steps in FIG. 2 and FIG. 6 may include multiple sub-steps or stages, which do not necessarily have to be completed at the same moment but can be executed at different times. The execution order of these sub-steps or stages is not necessarily sequential either; instead, they can be performed alternately or in rotation with other steps or sub-steps/stages of other steps.

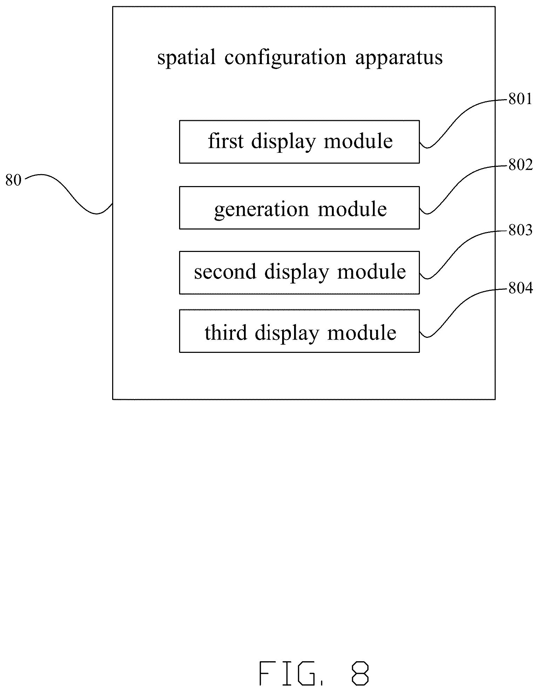

Please refer to FIG.8, a spatial configuration apparatus 80 is provided, including: a first display module 801, a generation module 802, a second display module 803 and a third display module 804.

The first display module 801 is configured to display a configuration page; the configuration page including a spatial region corresponding to a target space. The generation module 802 is configured to obtain a user selection of an arbitrary area within the spatial region and generate a monitoring region. The second display module 803 is configured to, in response to a selection operation directed to the monitoring region, display a function configuration page for the monitoring region. The third display module 804 is configured to, in response to a selection operation directed to the monitoring region, display a function configuration page for the selected monitoring region, wherein the function configuration page is configured to display configured region monitoring attribute adapted to the spatial type for the monitoring region; wherein the region monitoring attribute is configured for performing target detection within each monitoring region based on its respective region monitoring attribute.

In one embodiment, the function configuration page includes a configuration item corresponding to the spatial type. The third display module 804 includes: a first display unit, a second display unit and a third display unit. The first display unit is configured to, in response to a trigger operation for the configuration item corresponding to the spatial type, display a spatial type configuration page; the spatial type configuration page including a plurality of selectable spatial types. The second display unit is configured to, in response to a user selection of a spatial type form the plurality of selectable spatial types, displaying, on the function configuration page, a selected spatial type as being configured for the monitoring region. The third display unit is configured to display, on the function configuration page, the region monitoring attribute for the monitoring region, wherein the region monitoring attribute is automatically configured and is adapted to the spatial type.

In one embodiment, the third display module 804 is configured to obtain a predetermined mapping relationship between spatial types and region monitoring attributes, and, displaying, on the function configuration page, the region monitoring attribute for the monitoring region, wherein the region monitoring attribute is automatically configured based on the predetermined mapping relationship and is adapted to the spatial type.

In one embodiment, the predetermined mapping relationship between spatial types and region monitoring attributes is obtained through relationship configuration. The third display module 804 includes a relationship configuration unit. The relationship configuration unit is configured to obtain environmental signals corresponding to spatial regions of a plurality of spatial types, determine, based on the environmental signals, activity state features and interference features of a target object in each spatial region, and determine, based on a relationship between an activity state feature and an interference feature of the target object in each spatial region, mapping relationships between various spatial types and region monitoring attributes.

In one embodiment, the relationship configuration unit is further configured to: based on the mapping relationship between spatial types and region activity attributes and the mapping relationship between each region activity attribute and the activity state feature of the target object, determine the mapping relationship between various spatial types and the activity state features of the target object; determining, based on the mapping relationships between the various spatial types and the activity state features of the target object, and the mapping relationships between the spatial types and the interference features, an activity state feature and a corresponding interference feature of the target object for each spatial type; determining, based on the mapping relationships between the activity state features, the interference features of each target object and the region monitoring attributes, the mapping relationships between the various spatial types and the region monitoring attributes.

In one embodiment, the function configuration page includes a configuration item of the region monitoring attribute. The spatial configuration apparatus further includes an adjustment module. The adjustment module is configured to, in response to a trigger operation on the configuration item of the region monitoring attribute, display an attribute configuration page for the region monitoring attribute, and, in response to an adjustment operation on the configuration item corresponding to the region monitoring attribute on the attribute configuration page, display the adjusted region monitoring attribute under the configuration item of the region monitoring attribute.

It should be noted that, when the spatial configuration apparatus provided in the above embodiment performs configuration, only the division of the above functional modules is taken as an example for illustration. In actual applications, the above functions may be allocated to be completed by different functional modules according to needs. That is, the internal structure of the spatial configuration apparatus is divided into different functional modules so as to complete all or part of the functions described above.

For specific limitations on the spatial configuration apparatus, reference may be made to the limitations on the spatial configuration method described above, which will not be repeated here. The modules in the above spatial configuration apparatus may be implemented wholly or partially by software, hardware or a combination thereof. The modules may be embedded in a processor in the form of hardware or independent of the processor in the computer device, or may be stored in a memory of the computer device in the form of software, so as to be called by the processor to execute operations corresponding to the modules.

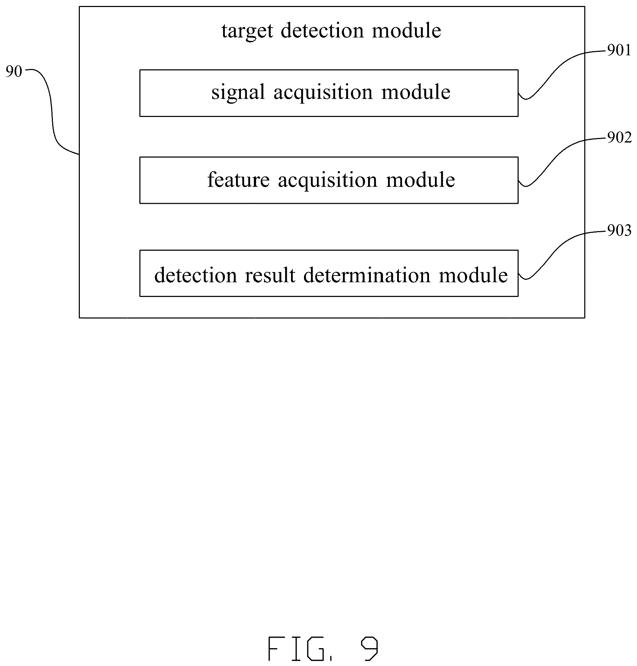

In another embodiment, please refer to FIG.9, a target detection apparatus 90 is provided, including a signal acquisition module 901, a feature acquisition module 902 and a detection result determination module 903.

The signal acquisition module 901 is configured to obtaining target signals of a target object for each monitoring region in a current space. The feature acquisition module 902 is configured to perform feature extraction on the target signals to obtain target features corresponding to the target object in each monitoring region. The detection result determination module is configured to determine, based on the region monitoring attribute of each monitoring region and the target features, a target detection result corresponding to each monitoring region. The region monitoring attribute is obtained by configuring a user selection of an arbitrary area within a spatial region of the configuration page, to generate a monitoring region and configuring, for each monitoring region, region monitoring attribute adapted to the spatial type within each monitoring region.

In one embodiment, the detection result determination module 903 includes: a strength attribute acquisition unit and a detection result determination unit. The strength attribute acquisition unit is configured to obtain a feature strength attribute corresponding to the target features of the target object in each monitoring region. The detection result determination unit is configured to determine, based on the region monitoring attribute of each monitoring region and the feature strength attribute of each target feature, the target detection result corresponding to each monitoring region.

In one embodiment, the detection result determination unit includes: a first detection result determination subunit and a second detection result determination subunit. The first detection result determination subunit is configured to determine that the target detection result of the monitoring region is that the target is detected when the area monitoring attribute of the current monitoring region is low and the corresponding feature intensity attribute is strong. The second detection result determination subunit is configured to determine that the target detection result of the monitoring region is that the target is detected when the area monitoring attribute of the current monitoring region is high and the corresponding feature intensity attribute is either weak or strong.

In one embodiment, the target object includes a human body; the area monitoring attribute includes area sensitivity; the detection result determination module 903 is configured to determine the human body detection result corresponding to each monitoring region based on the area sensitivity of each monitoring region and the feature intensity attribute corresponding to the target feature of the human body. The target detection device also includes: a control module, which is configured to control the corresponding device to execute the automation control scheme when the human body detection result corresponding to the monitoring region is that a human body is detected and the trigger condition of the automation control scheme corresponding to the monitoring region is the detection of a human body.

It should be noted that, when the target detection apparatus provided in the above embodiment performs detection, only the division of the above functional modules is taken as an example for illustration. In actual applications, the above functions may be allocated to be completed by different functional modules according to needs. That is, the internal structure of the target detection apparatus is divided into different functional modules so as to complete all or part of the functions described above.

For specific limitations on the target detection apparatus, reference may be made to the limitations on the target detection method described above, which will not be repeated here. The modules in the above target detection apparatus may be implemented wholly or partially by software, hardware or a combination thereof. The modules may be embedded in a processor in the form of hardware or independent of the processor in the computer device, or may be stored in a memory of the computer device in the form of software, so as to be called by the processor to execute operations corresponding to the modules.

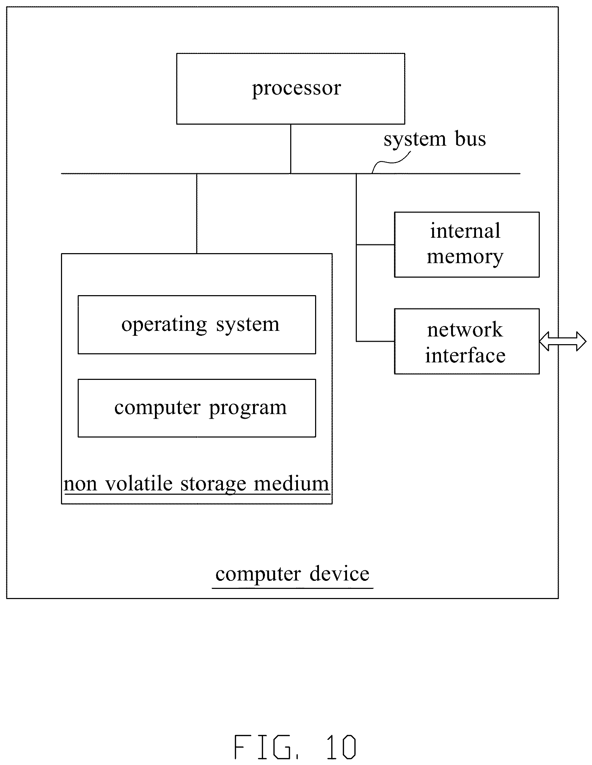

In one embodiment, a computer device is provided. The computer device may be a server, and its internal structure diagram may be as shown in FIG. 10. The computer device includes a processor, a memory, a network interface, and a database connected through a system bus. The processor of the computer device is configured to provide computing and control capabilities. The memory of the computer device includes a non volatile storage medium and an internal memory. The non volatile storage medium stores an operating system, a computer program, and a database. The internal memory provides an environment for the operation of the operating system and computer program in the non volatile storage medium. The database of the computer device is configured to store data in the spatial configuration method. The network interface of the computer device is used for network connection and communication with external terminals. When the computer program is executed by the processor, it implements a spatial configuration method.

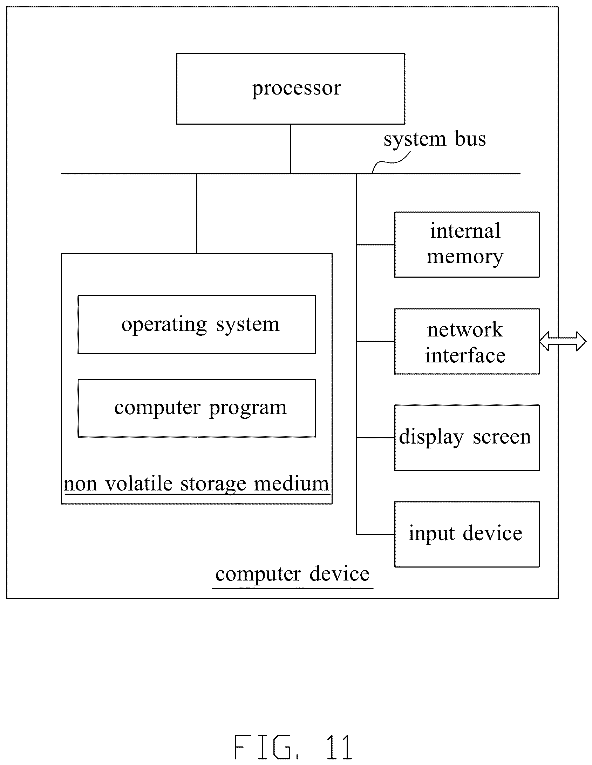

In one embodiment, a computer device is provided. The computer device may be a terminal, and its internal structure diagram may be as shown in FIG. 11. The computer device includes a processor, a memory, a network interface, a display screen and an input device connected through a system bus. The processor of the computer device is configured to provide computing and control capabilities. The memory of the computer device includes a nonvolatile storage medium and an internal memory. The nonvolatile storage medium stores an operating system and a computer program. The internal memory provides an environment for the operation of the operating system and the computer program in the nonvolatile storage medium. The network interface of the computer device is configured to communicate with an external terminal through a network. When the computer program is executed by the processor, a spatial configuration method is implemented. The display screen of the computer device may be a liquid crystal display screen or an electronic ink display screen, and the input device of the computer device may be a touch layer covering the display screen, or may be keys, a trackball or a touch panel arranged on the housing of the computer device, or may be an external keyboard, touch panel or mouse, etc.

Persons skilled in the art can understand that the structures shown in FIG. 10 and FIG.11 are merely block diagrams of the parts related to the solution of this application and do not constitute a limitation on the computer device to which the solution of this application is applied. The specific computer device may include more or fewer components than shown in the figures, or combine certain components, or have a different component layout.

In one embodiment, a computer device is provided, including a memory and a processor. The memory stores a computer program, and when the computer program is executed by the processor, the steps in the above method embodiments are implemented.

In one embodiment, a computer readable storage medium is provided. A computer program is stored on the computer readable storage medium, and when the computer program is executed by a processor, the steps in the above method embodiments are implemented.

In one embodiment, a computer program product or computer program is provided. The computer program product or computer program includes computer instructions. The computer instructions are stored in a computer readable storage medium. A processor of a computer device reads the computer instructions from the computer readable storage medium, and the processor executes the computer instructions, so that the computer device executes the steps in the above method embodiments.

Those of ordinary skill in the art may understand that all or part of the processes in the methods of the above embodiments may be completed by instructing relevant hardware through a computer program. The computer program may be stored in a non volatile computer readable storage medium. When the computer program is executed, the steps of the embodiments of the above methods may be included. Among them, the memory, storage, database or other medium used in each embodiment of the present disclosure may include non volatile and/or volatile memory. The non volatile memory may include a read only memory (ROM), a programmable ROM (PROM), an electrically programmable ROM (EPROM), an electrically erasable programmable ROM (EEPROM) or flash memory. The volatile memory may include a random access memory (RAM) or an external high speed cache. By way of illustration and not limitation, RAM is available in many forms, such as static RAM (SRAM), dynamic RAM (DRAM), synchronous DRAM (SDRAM), double data rate SDRAM (DDR SDRAM), enhanced SDRAM (ESDRAM), synchronous link DRAM (SLDRAM), Rambus direct RAM (RDRAM), direct Rambus dynamic RAM (DRDRAM) and Rambus dynamic RAM (RDRAM), etc.

The technical features of the above embodiments may be arbitrarily combined. For concise description, not all possible combinations of the technical features in the above embodiments are described. However, as long as there is no contradiction between the combinations of the technical features, they should be considered as the scope described in this specification.

The above embodiments only express several embodiment manners of the present disclosure, and their description is specific and detailed, but they should not be therefore understood as limitations on the scope of the invention patent. It should be pointed out that for those of ordinary skill in the art, without departing from the concept of the present disclosure, several variations and improvements may be made, and these all fall within the protection scope of the present disclosure. Therefore, the protection scope of the patent of the present disclosure shall be subject to the appended claims.

## Claims

1. A spatial configuration method, performed by a computer device, comprising:
displaying a configuration page; wherein the configuration page comprises a spatial region corresponding to a target space;
receiving a user selection of an arbitrary area within the spatial region, and generating a monitoring region defined by the user selection;
in response to a selection operation directed to the monitoring region, displaying a function configuration page for the monitoring region;
obtaining a spatial type selected on the function configuration page, and displaying, on the function configuration page, a configured region monitoring attribute adapted to the spatial type for the monitoring region; wherein the configured region monitoring attribute is configured for performing target detection within each monitoring region based on its respective region monitoring attribute.

2. The spatial configuration method of claim **1,** wherein the function configuration page comprises a configuration item corresponding to the spatial type;
wherein said obtaining the spatial type selected on the function configuration page, and displaying the configured region monitoring attribute adapted to the spatial type for the monitoring region comprises:
in response to a trigger operation for the configuration item corresponding to the spatial type, displaying a spatial type configuration page; the spatial type configuration page comprising a plurality of selectable spatial types;
in response to a user selection of a spatial type form the plurality of selectable spatial types, displaying, on the function configuration page, a selected spatial type as being configured for the monitoring region;
displaying, on the function configuration page, an automatically configured region monitoring attribute adapted to the spatial type for the monitoring region.

3. The spatial configuration method of claim **1,** wherein said displaying the configured region monitoring attribute adapted to the spatial type for the monitoring region, comprises:
obtaining a predetermined mapping relationship between spatial types and region monitoring attributes;
displaying, on the function configuration page, the region monitoring attribute for the monitoring region, wherein the region monitoring attribute is automatically configured based on the predetermined mapping relationship and is adapted to the spatial type.

4. The spatial configuration method of claim **3,** wherein the method obtains the predetermined mapping relationship between spatial types and region monitoring attributes through a relationship configuration step, and the relationship configuration step, comprises:
obtaining environmental signals corresponding to spatial regions of a plurality of spatial types;
determining, based on the environmental signals, activity state features and interference features of a target object in each spatial region;
determining, based on a relationship between an activity state feature and an interference feature of the target object in each spatial region, mapping relationships between various spatial types and region monitoring attributes.

5. The spatial configuration method of claim **4,** wherein said determining, based on the relationship between the activity state feature and the interference feature of the target object in each spatial region, mapping relationships between various spatial types and region monitoring attributes, comprises:
determining mapping relationships between the various spatial types and the activity state features of the target object, based on mapping relationships between the spatial types and region activity attributes, and mapping relationships between the region activity attributes and the activity state features of the target object;
determining, based on the mapping relationships between the various spatial types and the activity state features of the target object, and the mapping relationships between the spatial types and the interference features, an activity state feature and a corresponding interference feature of the target object for each spatial type;
determining, based on the mapping relationships between the activity state features, the interference features of each target object and the region monitoring attributes, the mapping relationships between the various spatial types and the region monitoring attributes.

6. The spatial configuration method of claim **1,** wherein the function configuration page comprises a configuration item corresponding to the region monitoring attribute; after said obtaining the spatial type selected on the function configuration page and displaying, on the function configuration page, the configured region monitoring attribute adapted to the spatial type for the monitoring region, the method further comprises:
in response to a trigger operation on the configuration item corresponding to the region monitoring attribute,
displaying an attribute configuration page for the region monitoring attribute;
in response to an adjustment operation for the configuration item corresponding to the region monitoring attribute on the attribute configuration page, displaying an adjusted region monitoring attribute on the configuration item corresponding to the region monitoring attribute.

7. A target detection method, performed by a computer device, comprising:
obtaining target signals of a target object for each monitoring region in a current space;
performing feature extraction on the target signals to obtain target features corresponding to the target object in each monitoring region;
determining, based on region monitoring attribute of each monitoring region and the target features, a target detection result corresponding to each monitoring region; wherein the region monitoring attribute is obtained by configuring a user selection of an arbitrary area within a spatial region of a configuration page, to generate monitoring regions, and for each monitoring region, configuring region monitoring attribute adapted to spatial types for each monitoring region.

8. The target detection method of claim **7,** wherein said determining the target detection result based on the region monitoring attribute and the target feature comprises:
obtaining a feature strength attribute corresponding to the target features of the target object in each monitoring region;
determining, based on the region monitoring attribute of each monitoring region and the feature strength attribute of each target feature, the target detection result corresponding to each monitoring region.

9. The target detection method of claim **8,** wherein determining, based on the region monitoring attribute of each monitoring region and the feature strength attribute of each target feature, the target detection result corresponding to each monitoring region comprises:
when a region monitoring attribute of a current monitoring region is a low region monitoring attribute, and a corresponding feature strength attribute is a strong feature attribute, determining that the target detection result of the monitoring region is that a target is detected;
when the region monitoring attribute of the current monitoring region is a high region monitoring attribute, and the corresponding feature strength attribute is a weak feature attribute or a strong feature attribute, determining that the target detection result of the monitoring region is that the target is detected.

10. The target detection method according to any one of claims **7** to **9,** wherein the target object comprises a human body; the region monitoring attribute comprises region sensitivity; said determining, based on the region monitoring attribute of each monitoring region and the target features, the target detection result corresponding to each monitoring region, comprises:
determining a human body detection result corresponding to each monitoring region, based on the region sensitivity of each monitoring region and a feature strength attribute corresponding to a target feature of the human body;
the method further comprises:
when the human body detection result corresponding to the monitoring region is that a human body is detected, and a trigger condition of an automation control scheme corresponding to the monitoring region is a detection of the human body, controlling a corresponding device to perform the automation control scheme.

11. A spatial configuration apparatus, the spatial configuration apparatus comprising:
a first display module, configured to display a configuration page; wherein the configuration page comprises a spatial region corresponding to a target space;
a generation module, configured to receive a user selection of an arbitrary area within the spatial region, and generate a monitoring region defined by the user selection;
a second display module, configured to, in response to a selection operation directed to the monitoring region, display a function configuration page for the monitoring region;
a third display module, configured to obtain a spatial type selected on the function configuration page, and display, on the function configuration page, a configured region monitoring attribute adapted to the spatial type for the monitoring region; wherein the configured region monitoring attribute is configured for performing target detection within each monitoring region based on its respective region monitoring attribute.

12. The spatial configuration apparatus according to claim **11,** the function configuration page comprises a configuration item corresponding to the spatial type; wherein the third display module comprises:
a first display unit, configured to, in response to a trigger operation for the configuration item corresponding to the spatial type, display a spatial type configuration page; the spatial type configuration page comprising a plurality of selectable spatial types;
a second display unit, configured to, in response to a user selection of a spatial type form the plurality of selectable spatial types, displaying, on the function configuration page, a selected spatial type as being configured for the monitoring region;
a third display unit, configured to display, on the function configuration page, an automatically configured region monitoring attribute adapted to the spatial type for the monitoring region.

13. The spatial configuration apparatus according to claim **11,** wherein the mapping relationship between spatial types and region monitoring attributes is obtained through a relationship configuration step, the third display module comprises a relationship configuration unit, the relationship configuration unit is configured to obtain environmental signals corresponding to spatial regions of a plurality of spatial types, and determine, based on the environmental signals, activity state features and interference features of a target object in each spatial region, and then determine, based on a relationship between an activity state feature and an interference feature of the target object in each spatial region, mapping relationships between various spatial types and region monitoring attributes.

14. A target detection apparatus, the target detection apparatus comprising:
a signal acquisition module, configured to obtain target signals of a target object for each monitoring region in a current space;
a feature acquisition module, configured to perform feature extraction on the target signals to obtain target features corresponding to the target object in each monitoring region;
a detection result determination module, configured to determine, based on region monitoring attribute of each monitoring region and the target features, a target detection result corresponding to each monitoring region; wherein
the region monitoring attribute is obtained by configuring a user selection of an arbitrary area within a spatial region of a configuration page, to generate monitoring regions, and for each monitoring region, configuring region monitoring attribute adapted to spatial types for each monitoring region.

15. The target detection apparatus according to claim **14,** wherein the detection result determination module comprises:
a feature intensity acquisition unit, configured to obtain a feature strength attribute corresponding to the target features of the target object in each monitoring region;
a detection result determination unit, configured to determine, based on the region monitoring attribute of each monitoring region and a feature strength attribute of each target feature, the target detection result corresponding to each monitoring region.

16. The target detection apparatus according to claim **15,** wherein the detection result determination unit comprises:
a first detection result determination subunit, configured to determine that the target detection result of the monitoring region is that a target is detected, when a region monitoring attribute of a current monitoring region is a low region monitoring attribute, and a corresponding feature strength attribute is a strong feature attribute;
a second detection result determination subunit, configured to determine that the target detection result of the monitoring region is that the target is detected, when the region monitoring attribute of the current monitoring region is a high region monitoring attribute, and the corresponding feature strength attribute is a weak feature attribute or a strong feature attribute.

17. The target detection apparatus according to claim **16,** wherein the target object comprises a human body; the region monitoring attribute comprises region sensitivity; the detection result determination module is further configured to determine a human body detection result corresponding to each monitoring region, based on the region sensitivity of each monitoring region and a feature strength attribute corresponding to a target feature of the human body; the target detection apparatus further comprises a control module, configured to control a corresponding device to perform the automation control scheme, when the human body detection result corresponding to the monitoring region is that a human body is detected, and a trigger condition of an automation control scheme corresponding to the monitoring region is a detection of the human body.

18. A computer device, comprising a memory and a processor, wherein the memory stores instructions which, when executed by the processor, cause the processor to carry out the method according to any one claim of claims **1 to 10.**

19. A computer readable storage medium, having a computer program stored thereon, which, when executed by a processor, cause the processor to carry out the method according to any one claim of claims **1 to 10.**

20. A computer program product, comprising computer readable instructions, which, when executed by a processor, cause the processor to carry out the method according to any one claim of claims **1 to 10.**
